(19) Europäisches Patentamt
European Patent Office
Office européen des brevets

(11) Numéro de publication: **0 025 761**
**B1**

(12) # FASCICULE DE BREVET EUROPEEN

(45) Date de publication du fascicule du brevet: **23.04.86**

(51) Int. Cl.⁴: **C 08 F 4/02**, C 08 F 10/00, C 08 F 4/62, C 07 F 7/00

(21) Numéro de dépôt: **80401305.0**

(22) Date de dépôt: **12.09.80**

(54) **Composant catalytique et son procédé de préparation.**

(30) Priorité: **13.09.79 FR 7922842**

(43) Date de publication de la demande: **25.03.81 Bulletin 81/12**

(45) Mention de la délivrance du brevet: **23.04.86 Bulletin 86/17**

(84) Etats contractants désignés: **AT BE CH DE GB IT LI LU NL SE**

(56) Documents cités:
**FR - A - 2 024 149**
**FR - A - 2 040 154**
**FR - A - 2 099 345**
**FR - A - 2 133 834**
**FR - A - 2 342 306**
**FR - A - 2 370 054**

(73) Titulaire: **Société Chimique des Charbonnages, Tour Aurore Place des Reflets Cédex no 5, F-92080 Paris la Défense 2 (FR)**

(72) Inventeur: **Bujadoux, Karel, 31, Avenue Van Pelt, F-62300 Lens (FR)**

(74) Mandataire: **Dubost, Thierry Pierre, SOCIETE CHIMIQUE DES CHARBONNAGES Service Propriété Industrielle B.P. 57, F-62670 Mazingarbe (FR)**

**EP 0 025 761 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de réduction d'halogénures métalliques en phase vapeur par des composés organomagnésiens solides ainsi que les produits réduits obtenus.

Le brevet français n° 2.370.054 décrit des composés organomagnésiens obtenus à l'état solide par un procédé original ainsi que l'application de ces composés à la synthèse d'halogénure de magnésium anhydre. Le même brevet décrit également l'application de ces composés à la réduction du tétrachlorure de titane par mise en suspension dans un solvant hydrocarboné anhydre. Afin de tirer un meilleur parti de la nature solide desdits composés organomagnésiens, la présente invention se rapporte à leur application à la réduction directe (sans solvant) d'halogénures métalliques en phase vapeur.

Le procédé selon l'invention est donc un procédé de réduction d'un halogénure métallique d'un métal des groupes IV B et V B de la Classification Périodique, ledit métal se trouvant à l'état de valence 4 s'il s'agit d'un métal du groupe IV B et à l'état de valence 4 ou 5 s'il s'agit d'un métal du groupe V B, par au moins un composé organomagnésien de formule RMgX dans laquelle R est un radical hydrocarboné et X est un halogène, caractérisé en ce que ledit organomagnésien est employé à l'état solide en l'absence de solvant, en ce que la réduction est effectuée sous une pression inférieure ou égale à la pression atmosphérique et à une température inférieure au point de décomposition dudit composé organomagnésien sous la pression considérée mais supérieure d'au moins 10 °C au point d'ébullition ou de sublimation de l'halogénure métallique sous la pression considérée. Dans les conditions physico-chimiques du procédé ainsi défini, la réaction de réduction est du type solide-gaz et permet l'obtention de produits réduits dans lesquels la valence du métal est généralement comprise entre 2 et 3,5. La réaction peut donc être conduite selon la technique dite du lit fluidisé. On observe alors que la fluidisation du composé organomagnésien est avantageusement améliorée lorsqu'on effectue la réduction en présence d'un halogénure de magnésium.

Le procédé de réduction selon l'invention permet d'obtenir des produits solides de faible granulométrie et de formule bien définie:

$$(MX_a)\ (MgX_2)_b\ (RMgX)_c\ (HMgX)_d$$

dans laquelle M est le métal du groupe IV B ou V B, $2 \leqslant a \leqslant 3{,}5$, $1 \leqslant b \leqslant 30$, $1 < c \leqslant 8$ et $0 \leqslant d \leqslant 10$. En général il est souhaitable que l'halogène X du composé organomagnésien réducteur soit le même que celui de l'halogénure métallique que l'on désire réduire, cet halogène pouvant être le fluor, le chlore, le brome ou l'iode. En effet lorsque les deux halogènes sont différents, la réaction s'effectue de façon similaire mais conduit à des produits solides de formule plus complexe. Il va de soi que le coefficient b est égal à 1 lorsque le procédé selon l'invention est mis en oeuvre en absence d'halogénure de magnésium, supérieur à 1 lorsqu'il est mis en oeuvre en présence d'halogénure de magnésium. En ce qui concerne le coefficient d, il faut noter que les solides réduits obtenus selon l'invention ne comportent généralement pas d'hydrohalogénure de magnésium lorsque la température de la réaction a été contrôlée correctement et maintenue entre les limites spécifiées du procédé; on a alors d = 0. Par contre une élévation incontrôlée de la température audessus du point de décomposition du composé organomagnésien réducteur, même localisée en un seul point du lieu de la réaction, peut conduire à la formation d'hydrohalogénure de magnésium en une quantité mesurée par le coefficient d.

Les halogénures métalliques que l'on soumet à réduction conformément au procédé selon l'invention sont de préférence les halogénures tétravalents du titane, du vanadium et du zirconium et les oxyhalogénures du vanadium $VOX_3$. Ces halogénures sont réduits, au moyen du procédé selon l'invention, au moins en partie à l'état de valence 3 et plus généralement à l'état de valence 2. La valence moyenne du solide réduit, définie comme la moyenne pondérée des états de valence présents dans ledit solide, est donc comprise entre 2 et 3,5 inclusivement.

Les composés organomagnésiens solides employés comme réducteurs dans le cadre du procédé selon l'invention sont de préférence des produits pulvérulents obtenus conformément au brevet français n° 2.370.054. On sait que la température de décomposition de ces produits dépend de la nature du radical hydrocarboné R; elle est généralement d'environ 170 °C lorsque R est aliphatique, de 250 °C lorsque R est aromatique. Cette température constitue la limite supérieure des températures de réaction utilisables dans le cadre de la présente invention. D'autre part les températures d'ébullition de $VOCl_3$, $TiCl_4$ et $VCl_4$ sont respectivement de 127 °C, 136 °C et 148 °C sous pression atmosphérique. On comprend donc que, pour que la température de réaction ne soit pas trop proche de la limite supérieure admissible et donc pour faciliter le contrôle de la réaction, la conduite de la réaction sous pression réduite soit à conseiller. Toutefois il n'est pas nécessaire d'abaisser la pression de réaction en-dessous de 1,33 mbar (1 mm Hg). Dans ces conditions, la température de réaction est généralement comprise entre 80 °C et 160 °C. Comme cela va de soi, la réaction doit être effectuée en atmosphère rigoureusement inerte et anhydre. Enfin la durée de la réaction est avantageusement comprise entre 1 et 10 heures.

Le procédé selon l'invention sera avantageusement mis en oeuvre, de manière soit discontinue soit continue, dans un réacteur à lit fluidisé, muni des moyens de chauffage adéquats, ainsi que de moyens de mesure et de contrôle de la température et de la pression.

Dans le cas du procédé continu, les particules solides de produit réduit éventuellement entraînées hors du réacteur sont retenues par un dispositif du type cyclone; de plus la partie de l'halogénure métallique soumis à réduction qui n'a pas réagi est recyclée vers le réacteur.

La formule des produits solides réduits obtenus conformément au procédé selon l'invention est aisément définissable à partir des résultats d'une analyse minérale quantitative des éléments M, X et Mg.

La présente invention sera mieux comprise à la lecture des exemples suivants, donnés à titre d'illustration.

EXEMPLE 1

L'appareillage utilisé comporte une ampoule à filtration munie d'un verre fritté et d'une double paroi, chauffée à environ 85 °C par l'intermédiaire d'une pompe à circulation d'huile et placée au-dessus d'un bouilleur dans lequel est vaporisé du tétrachlorure de titane. On opère sous une pression de 6,6 mbar (5 mm Hg). Les vapeurs de $TiCl_4$ sont entraînées par un léger courant d'azote et réagissent avec un mélange solide de chlorure de magnésium et de chlorure de n-butyl-magnésium, le rapport molaire du second au premier des composants de ce mélange étant égal à 0,38; la réduction est ainsi effectuée de manière discontinue pendant une durée de quatre heures. Le tétrachlorure de titane n'ayant pas réagi est ensuite condensé et récupéré. On observe une excellente fluidisation de la poudre solide et on récupère un solide réduit dont la formule, calculée à partir de l'analyse minérale quantitative des éléments Ti, Mg et Cl, est la suivante:

$$(TiCl_{3,5})\ (MgCl_2)_{6,9}\ (C_4H_9MgCl)_{3,2}$$

EXEMPLES 2 à 5

L'appareillage utilisé comporte un bouilleur muni d'une vanne à pointeau grâce à laquelle on règle le débit d'admission du tétrachlorure de titane. Au fond du bouilleur est disposé un lit de billes de verre. Le bouilleur est surmonté par une première ampoule cylindrique munie d'une double enveloppe à travers laquelle circule de l'huile chaude ainsi que, à sa base, d'une pastille en verre fritté de porosité 1. Le mélange solide de chlorure de magnésium et de chlorure de n-butylmagnésium est déposé sur cette pastille. L'ampoule cylindrique est surmontée par une deuxième ampoule de forme évasée destinée à limiter l'entraînement de particules solides et munie également d'une double enveloppe à travers laquelle circule de l'huile chaude. Le système d'agitation traversant les deux ampoules et atteignant la proximité immédiate de la pastille est constitué par un ruban en acier inoxydable de forme hélicoïdale entraîné par un moteur au moyen d'un dispositif magnétique. La deuxième ampoule est munie d'un tube de sortie comportant une plaque en verre fritté pour limiter l'entraînement de particules solides.

La réaction de réduction de $TiCl_4$ gazeux par $C_4H_9Mg\ Cl$ solide en présence de $MgCl_2$ est effectuée dans cet appareillage pendant une durée de sept heures, à une température T (°C) et sous une pression P (mm Hg) qui sont spécifiées dans le tableau ci-après. Le rapport molaire

$$\frac{C_4H_9Mg\ Cl}{MgCl_2}$$

utilisé est de 0,35 pour les exemples 2 et 4, de 3,6 pour les exemples 3 et 5.

La réduction se déroule sans que son contrôle soit rendu difficile et la poudre présente une bonne fluidisation. Les produits réduits obtenus sont soumis à une analyse quantitative des éléments Ti, Cl et Mg qui conduit à des formules

$$(TiCl_2)\ (MgCl_2)_b\ (C_4H_9Cl)_c\ (HMgCl)_d$$

dans lesquelles b, c et d ont les valeurs spécifiées dans le tableau ci-après.

Tableau

| Exemple | T °C | P mbar | (mm Hg) | b | c | d |
|---|---|---|---|---|---|---|
| 2 | 100 | 1,33 | (1) | 29,6 | 6,3 | 0 |
| 3 | 100 | 106,6 | (80) | 6,2 | 2,8 | 0,8 |
| 4 | 125 | 106,6 | (80) | 13,3 | 1,2 | 0 |
| 5 | 150 | 1013 | (760) | 12,0 | 8,0 | 9,0 |

Les produits solides réduits selon l'invention sont utiles comme composants de systèmes catalytiques pour la polymérisation des oléfines.

**Revendications**

1. Procédé de préparation d'un composant catalytique par réduction d'un halogénure métallique d'un métal des groupes IV B et V B de la Classification Périodique, ledit métal se trouvant à l'état de valence 4 s'il s'agit d'un métal du groupe IV B et à l'état de valence 4 ou 5 s'il s'agit d'un métal du groupe V B, par au moins un composé organomagnésien de formule RMgX dans laquelle R est un radical hydrocarboné et X est un halogène, caractérisé en ce que ledit organomagnésien est employé à l'état solide en l'absence de solvant, en ce que la réduction est effectuée sous une pression inférieure ou égale à la pression atmosphérique et à une température inférieure au point de décomposition dudit composé organomagnésien sous la pression considérée mais supérieure d'au moins 10 °C au point d'ébullition ou de sublimation de l'halogénure métallique sous la pression considérée, de telle sorte que ledit halogénure métallique soit à l'état gazeux.

2. Procédé selon la revendication 1, caractérisé en ce que la réduction est conduite selon la technique de lit fluidisé.

3. Procédé selon la revendication 2, caractérisé

en ce que la réduction est effectuée en présence d'halogénure de magnésium.

4. Procédé selon l'une des revendications 1 à 3, caractérisé en ce que la durée de la réduction est comprise entre 1 et 10 heures.

5. Procédé selon l'une des revendications 1 à 4, caractérisé en ce que l'halogénure métallique est choisi parmi les halogénures tétravalents du titane, du vanadium et du zirconium et les oxyhalogénures du vanadium.

6. Procédé selon l'une des revendications 1 à 5, caractérisé en ce que la réduction est effectuée à une température comprise entre 80 °C et 160 °C.

7. Procédé selon l'une des revendications 1 à 6, caractérisé en ce que la réduction est effectuée sous une pression comprise entre 1,333 millibar et la pression atmosphérique.

8. Composant catalytique comprenant un composé halogéné d'un métal M des groupes IV B et V B de la Classification Périodique, un halogénure de magnésium et un halogénure organomagnésien, caractérisé en ce qu'il a pour formule

$$(MX_a)\ (MgX_2)_b\ (RMgX)_c\ (HMgX)_d$$

dans laquelle X est un halogène, R est un radical hydrocarboné, $2 \leqslant a \leqslant 3{,}5$, $1 \leqslant b \leqslant 30$, $1 < c \leqslant 8$ et $0 \leqslant d \leqslant 10$, et en ce qu'il est susceptible d'être obtenu par le procédé selon la revendication 1.

9. Composant catalytique selon la revendication 8, caractérisé en ce que M est choisi parmi le titane et le vanadium.

10. Composant catalytique selon l'une des revendications 8 et 9, caractérisé en ce que X est choisi parmi le chlore, le brome et l'iode.

11. Application d'un composant catalytique selon l'une des revendications 8 à 10 à la polymérisation des oléfines.

3. A process according to claim 2, characterized in that reduction is carried out in the presence of a magnesium halide.

4. A process according to one of claims 1 to 3, characterized in that duration of the reduction is between 1 and 10 hours.

5. A process according to one of claims 1 to 4, characterized in that the metallic halide is selected from tetravalent halides of titanium, vanadium and zirconium and oxyhalides of vanadium.

6. A process according to one of claims 1 to 5, characterized in that reduction is carried out at a temperature between 80 °C and 160 °C.

7. A process according to one of claims 1 to 6, characterized in that reduction is carried out under a pressure between 1,333 millibar and atmospheric pressure.

8. A catalytic component comprising a halogenated compound of a metal M selected from group IVB and group VB of the Periodic Classification, a magnesium halide and an organomagnesium halide, characterized in that it has the formula

$$(MX_a)\ (MgX_2)_b\ (RMgX)_c\ (HMgX)_d$$

wherein X is a halogen, R is a hydrocarbon radical, $2 \leqslant a \leqslant 3.5$, $1 \leqslant b \leqslant 30$, $1 < c \leqslant 8$ and $0 \leqslant d \leqslant 10$ and it is likely to be prepared by the process of claim 1.

9. A catalytic component to claim 8, characterized in that M is selected from titanium and vanadium.

10. A catalytic component according to one of claims 8 and 9, characterized in that X is selected from fluorine, chlorine, bromine and iodine.

11. Application of a catalytic component according to one of claims 8 to 10 to the polymerization of olefins.

**Claims**

1. A process for preparing a catalytic component by reducing a metallic halide of a metal selected from group IVB and group VB of the Periodic Classification, the valency of said metal being 4 if a metal of group IVB is concerned and 4 or 5 if a metal of group VB is concerned, by means of at least one organomagnesium compound having the formula RMgX wherein R is a hydrocarbon radical and X is a halogen, characterized in that the said organomagnesium compound is used in the solid state in the absence of a solvent and reduction of a metallic halide is carried out under a pressure lower than or equal to atmospheric pressure and at a temperature lower than the decomposition point of the said organomagnesium compound under the pressure concerned but at least 10 °C higher than the boiling point or sublimation point of the metallic halide under the pressure concerned, in such a manner that the said metallic halide is in the gaseous state.

2. A process according to claim 1, characterized in that reduction is carried to the fluidized bad technique.

**Patentansprüche**

1. Verfahren zur Herstellung einer katalytischen Komponente durch Reduktion eines Metallhalogenids eines Metalls der Gruppen IVB und VB des Periodensystems, wobei sich das genannte Metall im vierwertigen Zustand befindet, wenn es sich um ein Metall der Gruppe IVB handelt, und im vier- bis fünfwertigen Zustand, wenn es sich um ein Metall der Gruppe VB handelt, mit mindestens einer Organomagnesiumverbindung der Formel RMgX, in der R ein Kohlenwasserstoffradikal und X ein Halogen ist, dadurch gekennzeichnet, dass die genannte Organomagnesiumverbindung in festem Zustand in Abwesenheit eines Lösungsmittels eingesetzt wird, dass die Reduktion unter einem Druck, der niedriger ist als der oder gleich ist dem Atmosphärendruck, und bei einer Temperatur durchgeführt wird, die geringer ist als der Zersetzungspunkt der Organomagnesiumverbindung unter dem angewandten Druck, jedoch mindestens um 10 °C höher ist als der Siedepunkt oder Sublimationspunkt des Metallhalogenids unter dem angewandten Druck, derart, dass sich das genannte Metallhalogenid in gasförmigem Zustand befindet.

2. Verfahren nach Anspruch 1, dadurch gekennzeichnet, dass die Reduktion nach der Fliessbetttechnik durchgeführt wird.

3. Verfahren nach Anspruch 2, dadurch gekennzeichnet, dass die Reduktion in Gegenwart von Magnesiumhalogenid durchgeführt wird.

4. Verfahren nach einem der Ansprüche 1 bis 3, dadurch gekennzeichnet, dass die Reduktionsdauer zwischen 1 und 10 Stunden beträgt.

5. Verfahren nach einem der Ansprüche 1 bis 4, dadurch gekennzeichnet, dass das Metallhalogenid ausgewählt ist aus den vierwertigen Halogeniden von Titan, Vanadium und Zirkon und den Oxyhalogeniden von Vanadium.

6. Verfahren nach einem der Ansprüche 1 bis 5, dadurch gekennzeichnet, dass die Reduktion bei einer Temperatur zwischen 80 °C und 160 °C durchgeführt wird.

7. Verfahren nach einem der Ansprüche 1 bis 6, dadurch gekennzeichnet, dass die Reduktion unter einem Druck zwischen 1,333 Millibar und dem Atmosphärendruck durchgeführt wird.

8. Katalytische Komponente enthaltend ein Halogenid eines Metalls M der Gruppen IVB und VB des Periodensystems, ein Magnesiumhalogenid und ein Organomagnesiumhalogenid, dadurch gekennzeichnet, dass es die Formel

$$(MX_a)\ (MgX_2)_b\ (RMgX)_c\ (HMgX)_d$$

besitzt, in der X ein Halogen und R ein Kohlenwasserstoffradikal ist, $2 \leqslant a \leqslant 3{,}5$, $1 \leqslant b \leqslant 30$, $1 < c \leqslant 8$ und $0 \leqslant d \leqslant 10$, und dass es durch das Verfahren nach Anspruch 1 erhalten werden kann.

9. Katalytische Komponente nach Anspruch 8, dadurch gekennzeichnet, dass M Titan oder Vanadium ist.

10. Katalytische Komponente nach Anspruch 8 oder 9, dadurch gekennzeichnet, dass X ausgewählt ist aus der Gruppe bestehend aus Chlor, Brom und Jod.

11. Anwendung einer katalytischen Komponente nach einem der Ansprüche 8 bis 10 bei der Polymerisation von Olefinen.